# EUROPÄISCHE PATENTSCHRIFT

(11) **EP 2 517 816 B1**
(45) Veröffentlichungstag und Bekanntmachung des Hinweises auf die Patenterteilung: **18.12.2013**
(21) Anmeldenummer: 10405030.7
(22) Anmeldetag: 18.02.2010
(51) Int. Cl.: B23F 5/22

(54) **Mehrspindlige Wälzfräsmaschine**
Multi-spindle hob
Machine de fraise mère développante à plusieurs broches

(43) Veröffentlichungstag der Anmeldung: 31.10.2012
(73) Patentinhaber: New Wyssbrod Technology AG, 8640 Rapperswil-Jona (CH)
(72) Erfinder: Büttler, Urs, 2540 Grenchen (CH); Walter, Simon, 2552 Orpund (CH)
(74) Vertreter: Rentsch Partner AG

(56) Entgegenhaltungen:
- GB-A- 889 506
- US-A- 1 972 818
- US-A- 2 231 865

## Beschreibung

### Technisches Gebiet

Die Erfindung betrifft eine Wälzfräsmaschine für das Wälzfräsen von n Werkstücken gleichzeitig, mit einem n-fach-Fräskopf mit n parallel zueinander stehenden Fräserspindelachsen, einem n-fach-Reitstock und einem n-fach-Werkstückspindelstock mit n in einer ersten horizontalen Hauptachsenrichtung parallel zueinander stehenden Werkstückspindelachsen.

### Stand der Technik

Unter der Bezeichnung CNC 7-4A ist ein 3-spindliger Produktions- oder Werkzeugfräsautomat der Firma Wyssbrod Technologie AG für die spanabhebende Umfangbearbeitung von drei Werkstücken gleichzeitig bekannt. Die drei Fräserspindeln weisen einen festen Abstand zueinander auf und sind über ein Getriebe mit einer zentralen Antriebseinheit verbunden. Der 3-fach-Reitstock und der 3-fach-Werkstückspindelstock sind auf einem gemeinsamen Werkstückspindel- und Reitstocktisch verfahrbar angeordnet.

Hochpräzise wellenförmige Werkstücke wie Zahnräder und Schnecken von Getrieben lassen sich auf den bekannten 3-spindligen Fräsmaschinen CNC 7-4A nicht innerhalb der geforderten Toleranzen fertigen. Das Wälzfräsen von hochpräzisen Zahnradgeometrien, die auf Drehteilrohlinge wälzgefräst werden, erfolgte deshalb bis anhin auf 1-spindligen Wälzfräsmaschinen unter Inkaufnahme einer entsprechend verringerten Produktionsleistung.

### Darstellung der Erfindung

Der Erfindung liegt die Aufgabe zugrunde, eine mehrspindlige Wälzfräsmaschine der eingangs genannten Art bereitzustellen, mit welcher hochpräzise Zahnradgeometrien produktiv gefräst werden können.

Zur erfindungsgemässen Lösung der Aufgabe führt, dass der n-fach-Werkstückspindelstock und der n-fach-Reitstock n in einer zweiten horizontalen Hauptachsenrichtung rechtwinklig zur ersten horizontalen Hauptachsenrichtung längs horizontalen Verschiebeachsen einzeln verschiebbare Werkstückspindelstockeinheiten bzw. Reitstockeinheiten aufweisen, wobei n grösser als 1 ist.

Die erfindungsgemässe Feineinstellung ermöglicht eine Korrektur unterschiedlicher Fräsdurchmesser und Steigungsfehler pro Fräswerkzeug und pro Fräserspindel zur Werkstückachse. Auch eine Korrektur der Zylindrizität pro Fräserspindel ist möglich. Damit können gleichzeitig n, d.h. zwei, drei oder mehr, Werkstücke mit hoher Präzision bezüglich Zylindrizität gefräst werden. Die Teile-Ausbringung wird um einen Faktor n, in der Regel um einen Faktor 2 oder 3, erhöht.

Die getrennten und einzeln in der zweiten horizontalen Hauptachsenrichtung verfahrbaren Werkstückspindelstockeinheiten bzw. Reitstockeinheiten ermöglichen eine einfache und schnelle Korrektur von unterschiedlichen Fräserdurchmessern und der Konizität. Damit lassen sich Korrekturen für den Abgleich der Zahntiefe auch bei unterschiedlichen Fräserdurchmessern und die Konizität wie bei einer 1-spindligen Wälzfräsmaschine über eine einfache Steuerung korrigieren.

Bevorzugt sind die n Werkstückspindelstockeinheiten mit je einer Werkstückspindelantriebseinheit ausgestattet.

Bei einer zweckmässigen Ausführungsform sind die n Reitstockeinheiten auf je einem in der ersten horizontalen Hauptachsenrichtung längs horizontalen Verschiebeachsen einzeln verschiebbaren Längsschlitten und jeder Längsschlitten auf je einem in der zweiten horizontalen Hauptachsenrichtung längs den horizontalen Verschiebeachsen einzeln verschiebbaren Querschlitten festgelegt.

Bevorzugt sind die n Werkstückspindelstockeinheiten auf je einem in der zweiten horizontalen Hauptachsenrichtung längs horizontalen Verschiebeachsen einzeln verschiebbaren Querschlitten festgelegt.

Bevorzugt ist der n-fach-Fräskopf an einem in einer vertikalen Hauptachsenrichtung längs einer vertikalen Verschiebeachse verschiebbaren Vertikalschlitten festgelegt.

Bei einer bevorzugten Ausführungsform ist der n-fach-Fräskopf um eine in der zweiten horizontalen Hauptachsenrichtung liegende Fräskopfschwenkachse schwenkbar am Vertikalschlitten festgelegt.

Bei einer weiter bevorzugten Ausführungsform steht dem n-fach-Fräskopf ein längs einer in Richtung der Fräserspindelachsen liegenden Verschiebeachse verschiebbarer n-fach-Gegenlagerfräskopf gegenüber.

Die Stabilität des Fräskopfs erlaubt es, mit fliegenden Wälzfräsern zu fräsen. Ist der Fräskopf für den Einsatz von Schaftfräsern mit einem Gegenlagerfräskopf ausgelegt, wird ein gewollter Kraftschluss zwischen dem Fräskopf und dem Gegenlagerfräskopf und zusätzliche Stabilität erreicht.

### Kurze Beschreibung der Zeichnung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: eine perspektivische Ansicht einer Wälzfräsmaschine;
- Fig. 2: eine Draufsicht auf die Wälzfräsmaschine von Fig. 1;
- Fig. 3: eine Frontansicht der Wälzfräsmaschine von Fig. 1;
- Fig. 4: eine Seitenansicht der Wälzfräsmaschine von Fig. 1 in Blickrichtung M gemäss Fig. 3;
- Fig. 5: eine Seitenansicht der Wälzfräsmaschine von Fig. 1 in Blickrichtung N gemäss Fig. 3.

### Beschreibung von Ausführungsbeispielen

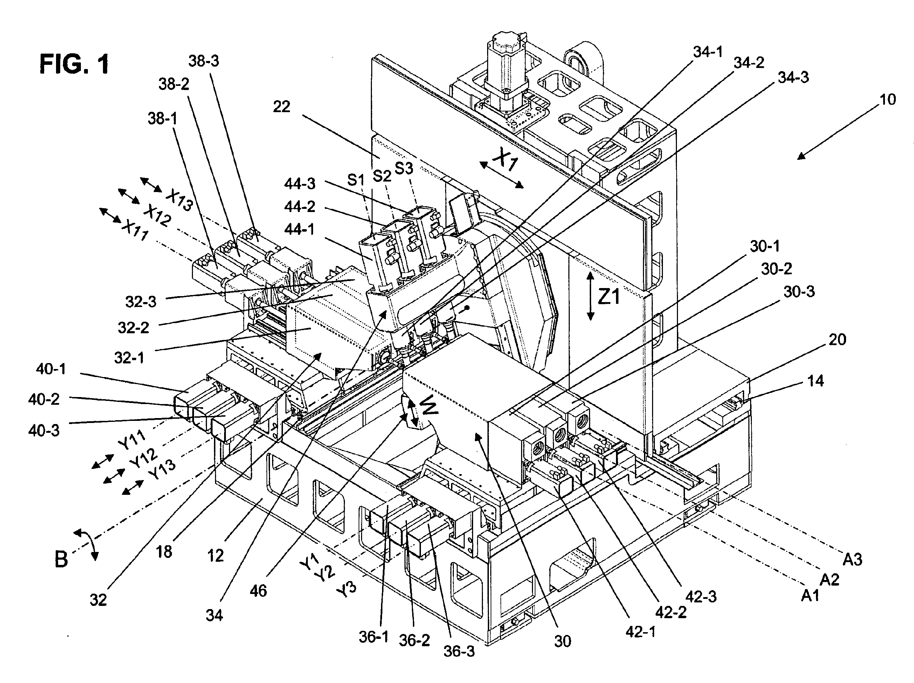

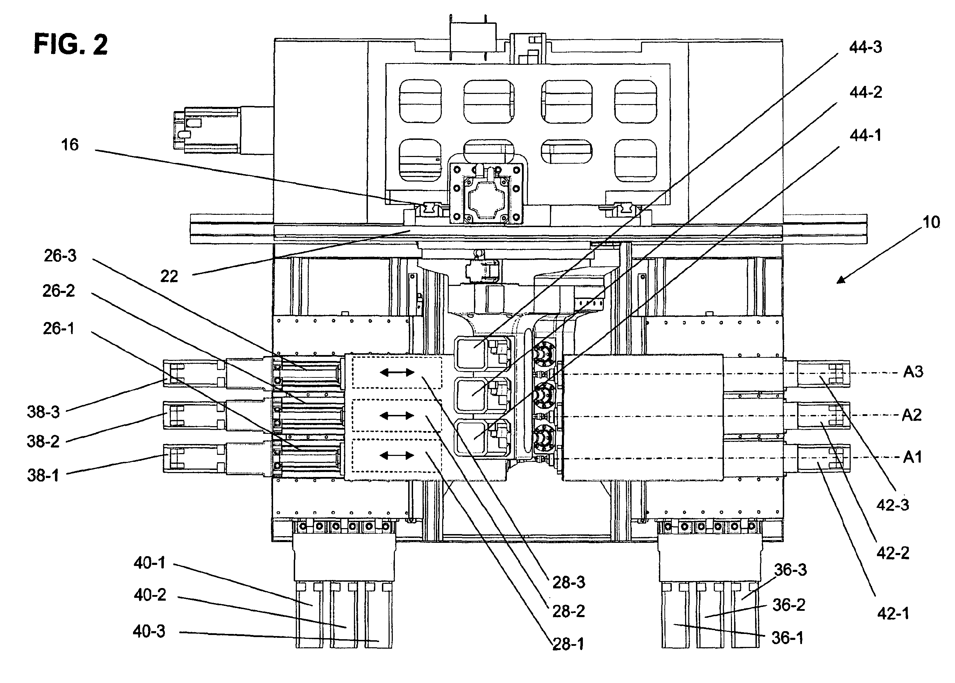

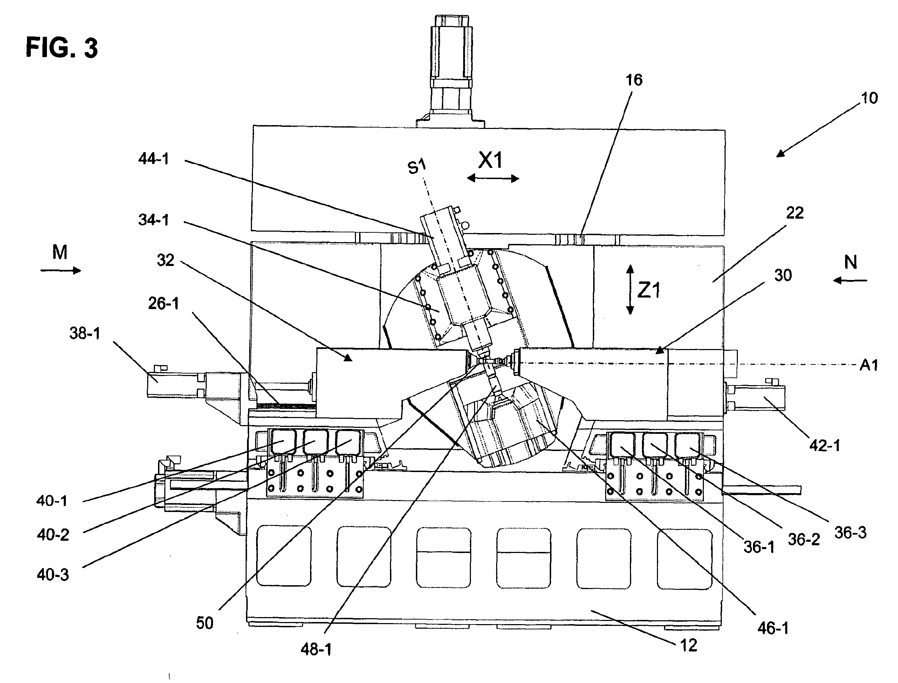

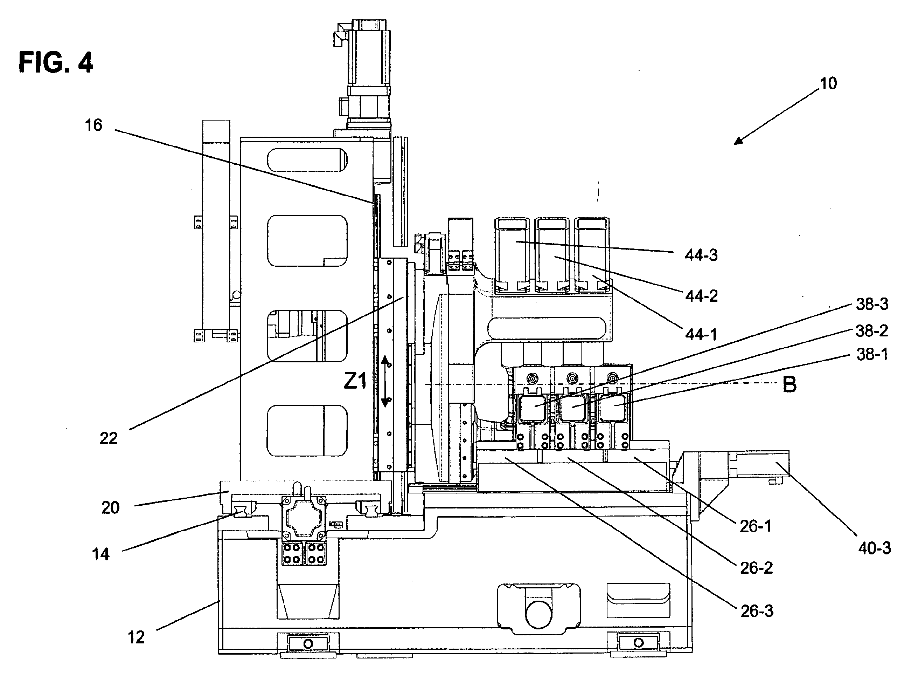

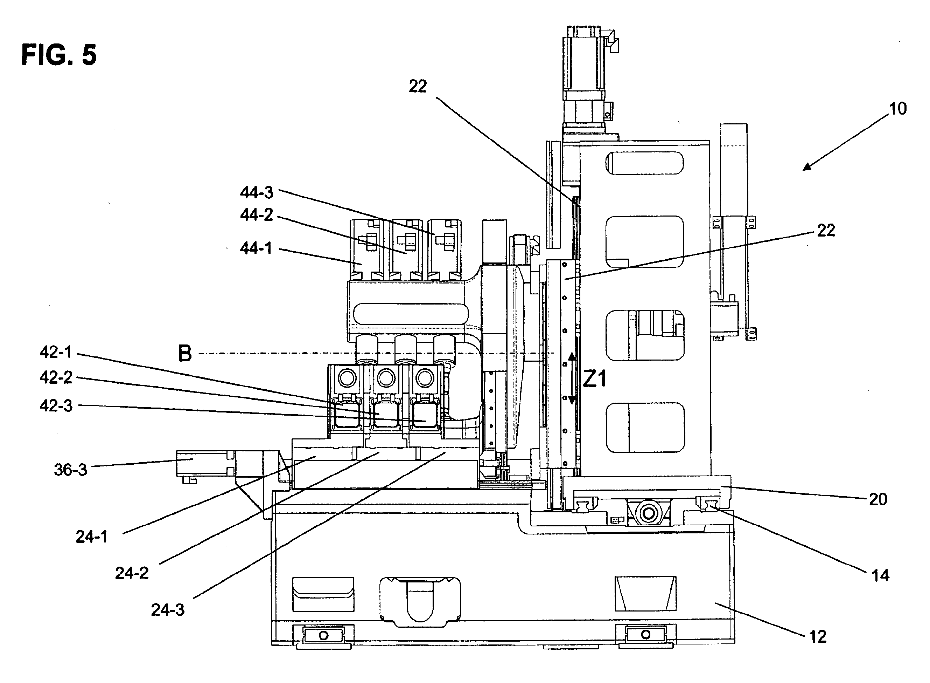

Eine in den Fig. 1 bis 5 dargestellte, dreispindlige Wälzfräsmaschine 10 zum gleichzeitigen Fräsen von drei Verzahnungen an drei Werkstücken in Form von Drehteilen umfasst einen verwindungssteifen Maschinenkörper 12 und feststehende Teile 14, 16, 18 von in den drei in einem rechten Winkel zueinander stehenden Hauptachsenrichtungen X, Y, Z liegenden Linearführungen eines Axialschlittens oder Ständers 20, eines Vertikalschlittens 22 und von je drei Radial-oder Querschlitten 24-1, 24-2, 24-3 und 26-1, 26-2, 26-3 für je drei Werkstückspindelstockeinheiten 30-1, 30-2, 30-3 und Reitstockeinheiten 32-1, 32-2, 32-3 eines 3-fach-Werkstückspindelstocks 30 bzw. Reitstocks 32.

Die am Maschinenkörper 12 festgelegten, feststehenden Linearführungsteile 14 liegen in der ersten horizontalen Hauptachsenrichtung X und ermöglichen als Teile einer Axialschlittenführung die Linearverschiebung des Axialschlittens 20 in der ersten horizontalen Hauptachsenrichtung X längs einer horizontalen Verschiebeachse X1.

Die ebenfalls am Maschinenkörper 12 festgelegten, feststehenden Linearführungsteile 18 liegen in der zweiten horizontalen Hauptachsenrichtung Y und ermöglichen als Teile von Querschlittenführungen die Linearverschiebung der Querschlitten 24-1, 24-2, 24-3 und 26-1, 26-2, 26-3 für die Werkstückspindelstockeinheiten 30-1, 30-2, 30-3 und Reitstockeinheiten 32-1, 32-2, 32-3 in der zweiten horizontalen Hauptachsenrichtung Y längs horizontalen Verschiebeachsen Y1, Y2, Y3; Y11, Y12, Y13.

Die am Axialschlitten 20 festgelegten, feststehenden Linearführungsteile 16 liegen in der vertikalen Hauptachsenrichtung Z und ermöglichen als Teile einer Vertikalschlittenführung die Linearverschiebung des Vertikalschlittens 22 in der vertikalen Hauptachsenrichtung Z längs einer vertikalen Verschiebeachse Z1.

Jede der drei Werkstückspindelstockeinheiten 30-1, 30-2, 30-3 ist auf je einem Querschlitten 24-1, 24-2, 24-3 montiert und in der zweiten horizontalen Hauptachsenrichtung Y mittels je einer jedem Querschlitten 24-1, 24-2, 24-3 zugeordneten Antriebseinheit 36-1, 36-2, 36-3 längs den horizontalen Verschiebeachsen Y1, Y2, Y3 einzeln verfahrbar.

Jede der drei Reitstockeinheiten 32-1, 32-2, 32-3 ist auf je einem Längsschlitten 28-1, 28-2, 28-3 montiert und in der ersten horizontalen Hauptachsenrichtung X mittels je einer jedem Längsschlitten 28-1, 28-2, 28-3 zugeordneten Antriebseinheit 38-1, 38-2, 38-3 längs den horizontalen Verschiebeachsen X11, X12, X13) einzeln verfahrbar. Jeder der drei Längsschlitten 28-1, 28-2, 28-3 ist auf je einem Querschlitten 26-1, 26-2, 26-3 montiert und in der zweiten horizontalen Hauptachsenrichtung Y mittels je einer jedem Querschlitten 26-1, 26-2, 26-3 zugeordneten Antriebseinheit 40-1, 40-2, 40-3 längs den horizontalen Verschiebeachsen Y11, Y12, Y13 einzeln verfahrbar. Die beschriebene Kombination eines Längs- mit einem Querschlitten wird auch als Kreuzschlitten bezeichnet.

Im Fräsbetrieb stehen die drei Reitstockeinheiten 32-1, 32-2, 32-3 des 3-fach-Reitstocks 32 den drei Werkstückspindelstockeinheiten 30-1, 30-2, 30-3 des 3-fach-Werkstückspindelstocks 30 gegenüber und bilden und drei parallele, in der ersten horizontalen Hauptachsenrichtung X liegende Werkstückspindelachsen A1, A2, A3.

Jede Werkstückspindelstockeinheit 30-1, 30-2, 30-3 ist über je eine Antriebseinheit 42-1, 42-2, 42-3 einzeln antreibbar. Die zwischen entsprechenden Werkstückspindelstockeinheiten 30-1, 30-2, 30-3 und Reitstockeinheiten 32-1, 32-2, 32-3 eingespannten Werkstücke 50, deren Drehachse in der entsprechenden Werkstückspindelachse A1, A2, A3 liegt, werden von den drei Antriebseinheiten 42-1, 42-2, 42-3 auf eine vorgegebene Rotationsgeschwindigkeit gebracht.

Ein 3-fach-Fräskopf 34 ist um eine in der zweiten horizontalen Hauptachsenrichtung Y liegende Fräskopfschwenkachse B schwenkbar am Vertikalschlitten 22 festgelegt. Der 3-fach-Fräskopf 34 umfasst drei mit je einem eigenen Hauptspindelantrieb 44-1, 44-2, 44-3 ausgestattete Fräskopfeinheiten 34-1, 34-2, 34-3 mit je einem Fräserwerkzeug 48-1, 48-2, 48-3.

Die drei Fräskopfeinheiten 34-1, 34-2, 34-3 bilden zusammen mit den endständig montierten Fräserwerkzeugen 48-1, 48-2, 48-3 drei parallel zueinander in einer gemeinsamen Ebene liegende und rechtwinklig zur Fräskopfschwenkachse B stehende Fräserspindelachsen S1, S2, S3.

Der Abstand zwischen benachbarten Fräserspindelachsen S1-S2 und S2-S3 ist für einen 3-fach-Fräskopf im Rahmen üblicher Fertigungstoleranzen im wesentlichen gleich gross und entspricht dem Abstand zwischen benachbarten Werkstückspindelachsen A1-A2 und A2-A3. Zur Herstellung hochpräziser Fertigteile ist deshalb erforderlich, die Fräserwerkzeuge und die zwischen den Werkstückspindelstockeinheiten 30-1, 30-2, 30-3 und den Reitstockeinheiten 32-1, 32-2, 32-3 eingespannten Drehteilrohlinge 50 individuell aufeinander einzustellen.

Die Einstellung eines vorgegebenen seitlichen Abstands zwischen einander entsprechenden Fräser- und Werkstückspindelachsen erfolgt in der Praxis durch individuelle Verschiebung jedes einzelnen Werkzeugspindelstockeinheit / Reitstockeinheit- Paares, bis der vorgegebene seitliche Abstand zwischen den Fräser- und Werkstückspindelachsenpaaren S1-A1, S2-A2 und S3-A3 erreicht ist.

Die Stabilität des 3-fach-Fräskopfs erlaubt es, mit drei fliegenden Wälzfräsern zu fräsen.

Der in der Zeichnung dargestellte, um die B-Achse automatisch schwenkbare Fräskopf 34 ist für den Einsatz von Schaftfräsern mit einem Gegenlagerfräskopf 46 ausgelegt. Der 3-fach-Gegenlagerfräskopf 46 umfasst drei Gegenlagerfräskopfeinheiten 46-1, 46-2, 46-3 und ist in einer linearen Verschiebeachse (W-Achse) parallel zu den Fräserspindelachsen S1, S2, S3 verschiebbar. Die Fräser werden über eine hydraulische Werkzeugspannung gewechselt. Mit der linear verfahrbaren W-Achse kann mit dem Gegenlagerfräskopf 46 auf den genauen Gegenlagerdurchmesser gefahren werden. Damit wird ein gewollter Kraftschluss zwischen dem Fräskopf 34 und dem Gegenlagerfräskopf 46 und zusätzliche Stabilität erreicht.

Das Shiften, d. h., die Verschiebebewegung des Fräskopfs 34 in Richtung der Fräserspindelachsen S1, S2, S3, erfolgt mittels Interpolation zwischen der Vertikalachse Z1 und der horizontalen Verschiebeachse oder Ständer-Längsachse X1. Die verwendete Shift-Software berechnet automatisch den Linearweg analog der Schräglage der drei Fräserspindelachsen S1, S2, S3. So kann ein Zwischenschlitten eingespart und kräftiger gebaut werden.

Sämtliche lineare Verschiebeachsen X1, X11, X12, X13, Y1, Y2, Y3, Y11, Y12, Y13, Z1 sowie die Rotationsachsen S1, S2, S3 und A1, A2, A3 und die Fräskopfschwenkachse B sind vorteilhaft NC-Achsen.

### Bezugszeichenliste

- 10: Wälzfräsmaschine
- 12: Maschinenkörper
- 14, 16, 18: Linearführungsteile an 12
- 20: Axialschlitten
- 22: Vertikalschlitten
- 24-1, -2, -3: Querschlitten
- 26-1, -2, -3: Querschlitten
- 28-1, -2, -3: Längsschlitten
- 30: Werkstückspindelstock
- 30-1, -2, -3: Werkstückspindelstockeinheiten
- 32: Reitstock
- 32-1, -2, -3: Reitstockeinheiten
- 34: Fräskopf
- 34-1, -2, -3: Fräskopfeinheiten
- 36-1, -2, -3: Antriebseinheiten für 24-1, -2, -3
- 38-1, -2, -3: Antriebseinheiten für 32-1, -2, -3
- 40-1, -2, -3: Antriebseinheiten für 26-1, -2, -3
- 42-1, -2, -3: Antriebseinheiten für 30-1, -2, -3
- 44: Hauptspindelantriebe für 34-1, -2, -3
- 46: Gegenlagerfräskopf
- 46-1, -2, -3: Gegenlagerfräskopfeinheiten
- 48-1, -2, -3: Fräserwerkzeuge
- 50: Werkstücke
- X1...: horizontale Verschiebeachsen in X-Richtung
- Y1...: horizontale Verschiebeachsen in Y-Richtung
- Z1: vertikale Verschiebeachse in Z-Richtung
- A1, A2, A3: Werkstückspindelachsen
- S1, S2, S3: Fräserspindelachsen
- B: Fräskopfschwenkachse
- W: Gegenlagerfräskopf-Verschiebeachse

## Patentansprüche

1. Wälzfräsmaschine für das Wälzfräsen von n Werkstücken gleichzeitig, mit einem n-fach-Fräskopf (34) mit n parallel zueinander stehenden Fräserspindelachsen (S1...Sn), einem n-fach-Reitstock (32) und einem n-fach-Werkstückspindelstock (30) mit n in einer ersten horizontalen Hauptachsenrichtung (X) parallel zueinander stehenden Werkstückspindelachsen (A1...An),
wobei
der n-fach-Werkstückspindelstock (30) und der n-fach-Reitstock (32) n in einer zweiten horizontalen Hauptachsenrichtung (Y) rechtwinklig zur ersten horizontalen Hauptachsenrichtung (X) längs horizontalen Verschiebeachsen (Y1...Yn; Y11...Y1n) verschiebbare Werkstückspindelstockeinheiten (30-1...30-n) und Reitstockeinheiten (32-1...32-n) aufweisen, wobei n grösser als 1 ist, **dadurch gekennzeichnet, dass** die Werkstückspindelstockeinheiten und die Reitstockeinheiten einzeln verschiebbar sind.

2. Wälzfräsmaschine nach Anspruch 1, **dadurch gekennzeichnet, dass** n gleich 2 oder 3 ist.

3. Wälzfräsmaschine nach Anspruch 1 oder 2, **dadurch gekennzeichnet, dass** die n Werkstückspindelstockeinheiten (30-1...30-n) mit je einer Werkstückspindelantriebseinheit (42-1...42-n) ausgestattet sind

4. Wälzfräsmaschine nach einem der Ansprüche 1 bis 3, **dadurch gekennzeichnet, dass** die n Reitstockeinheiten (32-1...32-n) auf je einem in der ersten horizontalen Hauptachsenrichtung (X) längs horizontalen Verschiebeachsen (X11...X1n) einzeln verschiebbaren Längsschlitten (28-1...28-n) und jeder Längsschlitten (28-1...28-n) auf je einem in der zweiten horizontalen Hauptachsenrichtung (Y) längs den horizontalen Verschiebeachsen (Y11...Y1n) einzeln verschiebbaren Querschlitten (26-1...26-n) festgelegt sind.

5. Wälzfräsmaschine nach einem der Ansprüche 1 bis 4, **dadurch gekennzeichnet, dass** die n Werkstückspindelstockeinheiten (30-1...30-n) auf je einem in der zweiten horizontalen Hauptachsenrichtung (Y) längs horizontalen Verschiebeachsen (Y11...Y1n) einzeln verschiebbaren Querschlitten (24-1...24-n) festgelegt sind.

6. Wälzfräsmaschine nach einem der Ansprüche 1 bis 5, **dadurch gekennzeichnet, dass** der n-fach-Fräskopf (34) an einem in einer vertikalen Hauptachsenrichtung (Z) längs einer vertikalen Verschiebeachse (Z1) verschiebbaren Vertikalschlitten (22) festgelegt ist.

7. Wälzfräsmaschine nach Anspruch 6, **dadurch gekennzeichnet, dass** der n-fach-Fräskopf (34) um eine in der zweiten horizontalen Hauptachsenrichtung (Y) liegende Fräskopfschwenkachse (B) schwenkbar am Vertikalschlitten (22) festgelegt ist.

8. Wälzfräsmaschine nach Anspruch 7, **dadurch gekennzeichnet, dass** dem n-fach-Fräskopf (34) ein längs einer in Richtung der Fräserspindelachsen (S1...Sn) liegenden Verschiebeachse (W) verschiebbarer n-fach-Gegenlagerfräskopf (46) gegenübersteht.

## Claims

1. Hobbing machine for hobbing n workpieces at the same time, having an n-fold milling head (34) with n milling spindle axes (S1...Sn) which lie parallel to one another, an n-fold tailstock (32) and an n-fold workpiece headstock (30) with n workpiece spindle axes (A1...An) which lie parallel to one another in a first horizontal main axial direction (X), wherein the n-fold workpiece headstock (30) and the n-fold tailstock (32) have n workpiece headstock units (30-1...30-n) and tailstock units (32-1...32-n) which can be displaced along horizontal displacement axes (Y1...Yn; Y11...Y1n) in a second horizontal main axial direction (Y) at right angles to the first horizontal main axial direction (X), where n is greater than 1, **characterized in that** the workpiece headstock units and the tailstock units can be displaced individually.

2. Hobbing machine according to Claim 1, **characterized in that** n is equal to 2 or 3.

3. Hobbing machine according to Claim 1 or 2, **characterized in that** the n workpiece headstock units (30-1...30-n) are equipped with in each case one workpiece spindle drive unit (42-1...42-n).

4. Hobbing machine according to one of Claims 1 to 3, **characterized in that** the n tailstock units (32-1...32-n) are fixed on in each case one longitudinal carriage (28-1...28-n) which can be displaced individually along horizontal displacement axes (X11...X1n) in the first horizontal main axial direction (X), and each longitudinal carriage (28-1...28-n) is fixed on in each case one transverse carriage (26-1...26-n) which can be displaced individually along the horizontal displacement axes (Y11...Y1n) in the second horizontal main axial direction (Y).

5. Hobbing machine according to one of Claims 1 to 4, **characterized in that** the n workpiece headstock units (30-1...30-n) are fixed on in each case one transverse carriage (24-1...24-n) which can be displaced individually along horizontal displacement axes (Y11...Y1n) in the second horizontal main axial direction (Y).

6. Hobbing machine according to one of Claims 1 to 5, **characterized in that** the n-fold milling head (34) is fixed on a vertical carriage (22) which can be displaced along a vertical displacement axis (Z1) in a vertical main axial direction (Z).

7. Hobbing machine according to Claim 6, **characterized in that** the n-fold milling head (34) is fixed on the vertical carriage (22) such that it can be pivoted about a milling head pivot axis (B) which lies in the second horizontal main axial direction (Y).

8. Hobbing machine according to claim 7, **characterized in that** an n-fold counterbearing milling head (46) which can be displaced along a displacement axis (W) which lies in the direction of the milling spindle axes (S1...Sn) lies opposite the n-fold milling head (34).

## Revendications

1. Machine à tailler des engrenages pour le treillage de n pièces simultanément, comprenant une tête de fraisage à n axes (34) comprenant n axes de broche de fraisage parallèles (S1...Sn), une poupée mobile à n axes (32) et une poupée porte-pièce à n axes (30) comprenant n axes de broche porte-pièce (Al...An) parallèles les uns aux autres dans une première direction d'axe principal horizontale (X),
la poupée porte-pièce à n axes (30) et la poupée mobile à n axes (32) présentant n unités de poupée porte-pièce (30-1...30-n) et n unités de poupée mobile (32-1...32-n) déplaçables dans une deuxième direction d'axe principal horizontale (Y) à angle droit par rapport à la première direction d'axe principal horizontale (X) le long d'axes de déplacement horizontaux (Y1...Yn ; Y11...Y1n), n étant supérieur à 1,
**caractérisée en ce que** les unités de poupée porte-pièce et les unités de poupée mobile peuvent être déplacées séparément.

2. Machine à tailler des engrenages selon la revendication 1, **caractérisée en ce que** n est égal à 2 ou 3.

3. Machine à tailler des engrenages selon la revendication 1 ou 2, **caractérisée en ce que** les n unités de poupée porte-pièce (30-1...30-n) sont chacune équipées d'une unité d'entraînement de broche porte-pièce (42-1...42-n).

4. Machine à tailler des engrenages selon l'une quelconque des revendications 1 à 3, **caractérisée en ce que** les n unités de poupée mobile (32-1...32-n) sont fixées sur un chariot longitudinal respectif (28-1...28-n) déplaçable séparément dans la première direction d'axe principal horizontale (X) le long d'axes de déplacement horizontaux (X11...X1n) et chaque chariot longitudinal (28-1...28-n) est fixé sur un chariot transversal respectif (26-1...26-n) déplaçable séparément dans la deuxième direction d'axe principal horizontale (Y) le long des axes de déplacement horizontaux (Y11...Y1n).

5. Machine à tailler des engrenages selon l'une quelconque des revendications 1 à 4, **caractérisée en ce que** les n unités de poupée porte-pièce (30-1...30-n) sont fixées sur un chariot transversal respectif (24-1...24-n) déplaçable séparément dans la deuxième direction d'axe principal horizontale (Y) le long d'axes de déplacement horizontaux (Y11...Y1n).

6. Machine à tailler des engrenages selon l'une quelconque des revendications 1 à 5, **caractérisée en ce que** la tête de fraisage à n axes (34) est fixée sur un chariot vertical (22) déplaçable dans une direction d'axe principal verticale (Z) le long d'un axe de déplacement vertical (Z1).

7. Machine à tailler des engrenages selon la revendication 6, **caractérisée en ce que** la tête de fraisage à n axes (34) est fixée sur le chariot vertical (22) de manière à pouvoir pivoter autour d'un axe de pivotement de tête de fraisage (B) situé dans la deuxième direction d'axe principal horizontale (Y).

8. Machine à tailler des engrenages selon la revendication 7, **caractérisée en ce qu'**une tête de fraisage à contre-palier à n axes (46) déplaçable le long d'un axe de déplacement (W) situé dans la direction des axes de broche de fraisage (S1...Sn) est en regard de la tête de fraisage à n axes (34).
